# EUROPEAN PATENT APPLICATION

(11) **EP 3 550 449 A1**
(43) Date of publication of application: **09.10.2019**
(21) Application number: 19160317.4
(22) Date of filing: 01.03.2019
(51) Int. Cl.: G06F 17/27, G06F 16/9032, G06F 16/332

(54) **SEARCH METHOD AND ELECTRONIC DEVICE USING THE METHOD**

(30) Priority: 02.04.2018 TW 107111684
(71) Applicant: Pegatron Corporation, Taipei City (TW)
(72) Inventor: HUNG, Wen-Pin, Taipei (TW)
(74) Representative: Viering, Jentschura & Partner mbB Patent- und Rechtsanwälte

(57) **Abstract**

The instant disclosure provides a search method and an electronic device (800) using the method. The search method includes: receiving an input string (SI); determining whether the input string (SI) corresponds to a predetermined rule stored in the electronic device (800); if yes, analyzing the input string (SI) into at least a first key string and a second key string according to the predetermined rule; and initiating a searching of the second key string through the network according to a predetermined condition related to the first key string. The electronic device (800) includes a rule module (300) for storing or reading the predetermined rule and a search system (100) for searching through a network by the search method.

## Description

### BACKGROUND

### Technical Field

The instant disclosure relates to a search method and an electronic device using the method. More particularly, the instant disclosure relates to a search method capable of automatically understanding a meaning in a sentence and carrying out a corresponding search through a network and an electronic device using the search method.

### Related Art

More and more technologies are applied with artificial intelligence. Manufacturers of varied kinds of products began to consider about how to apply a natural language processing technique to products with lower performance hardware. The trend of research and development is gradually towards techniques about how to provide the natural language processing technique on products with lower performance hardware.

In the field of artificial intelligence, there are two major researching fields including computer vision and natural language processing. Wherein, there are two traditional solutions regarding the natural language processing including: command and machine learning.

Since analyzing the meaning of a user's speaking is difficult, small scale software or applications may use the solution of command. A user is required to precisely speak (or output) a command supported by a software or a machine to make a function of the software or the machine executed. The software or the machine only needs to determine whether the sentence spoken by the user conforms to one of the supported commands. If yes, a corresponding function can be executed. However, the software or the machine can only recognize conformed commands. Users cannot give command in a natural speaking (input) way. The natural speaking (input) way means that a sentence of a user's speaking contains a lot of "redundant words," e.g.,, "does it can," "does it have," "that," "this," ,etc. While there is a redundant word in a sentence, the sentence cannot comfort to commands supported by the software and the machine; therefore, in the case of speak (input) in command, the natural language processing cannot be achieved. In addition, there is usually information contained in the sentence of a user's speaking. For example, "I want to watch (TV) channel 35," "adjust the air conditioner to 15 degrees," or "I want to listen to a song of xxx." The way of input in command cannot capture information from sentences of users, and also cannot list all information from users as supported commands.

In terms of the machine learning, the most popular technique is about deep-learning, in which program simulates neurons of human to construct a neural network to simulate a function of learning. A model of the neural network which has learned the natural language processing can effectively understand the need or question from sentences of human in a natural speaking way and execute corresponding functions.

Although the learned model of the neural network can understand the meaning of a use's speaking, the cost to train the model of the neural network is too high. In order to train a neural network to achieve a Chatbot function, all of vocabularies that may be used (which could be thousands of vocabularies) need to be collected in advance for training into a Word Vector. Next, a multilayer network (which can simulate the memory ability of the brain) can be built by a recurrent neural network unit or a similar modification unit, e.g., Long Short-Term Memory (LSTM) or Gated Recurrent Units (GRUs). The training to create a workable Chatbot may take days or a week. In addition, it may only be achieved in a case of using a Central Processing Unit (CPU) or a Graphics Processing Unit (GPU) with high performance. Considering the performance of a machine that an end user usually possesses, it is very difficult to train a neural network. In general, the natural language processing based upon neural network is usually practiced in a cloud service, and only those companies possessing big data (e.g., Google, Amazon, or Microsoft) have the ability to maintain the scale of such service and to provide devices applied with artificial intelligence.

### SUMMARY

One object of the instant disclosure is to provide a search method to provide a natural language processing function on products with lower performance hardware.

Another object of the instant disclosure is to provide an electronic device to allow an end user using the natural language processing function at local end by the electronic device.

A search method of the instant disclosure is applied to an electronic device for searching through a network, comprising: receiving an input string; determining whether the input string corresponds to a predetermined rule stored in the electronic device; if yes, analyzing the input string into at least a first key string and a second key string according to the predetermined rule; and initiating a searching of the second key string through the network according to a predetermined condition related to the first key string.

An electronic device of the instant disclosure comprises a rule module for storing or reading a predetermined rule and a search system for searching through a network. The search system comprises: an information input receiver for receiving input string information; and an information processor coupled to the information input receiver for determining whether the input string corresponds to the predetermined rule, analyzing the input string according to the predetermined rule, and initiating a network searching of at least one string through a network according to a predetermined condition.

### BRIEF DESCRIPTION OF THE DRAWINGS

FIG. 1 illustrates a schematic block diagram of a search system according to an embodiment of the instant disclosure;
FIG. 2 illustrates a flow chart of the search method according to an embodiment of the instant disclosure; and
FIGS. 3-5 illustrate schematic views of processing different input sentences according to embodiments of the instant disclosure.

### DETAILED DESCRIPTION OF THE EMBODIMENTS

To address the above issues, the instant disclosure provides a design of a light natural language processing system to allow an electronic device of an end user executing the natural language processing at local end, which provides an easier solution for applications requiring the natural language processing, e.g., a smart speaker or a Chatbot. The electronic device comprises a smart speaker, a tablet computer, a laptop computer, a desktop computer, a smart phone, a personal digital assistant, an electronic book, a digital photo frame, a digital Walkman, an electronic dictionary, a GPS navigator, etc.

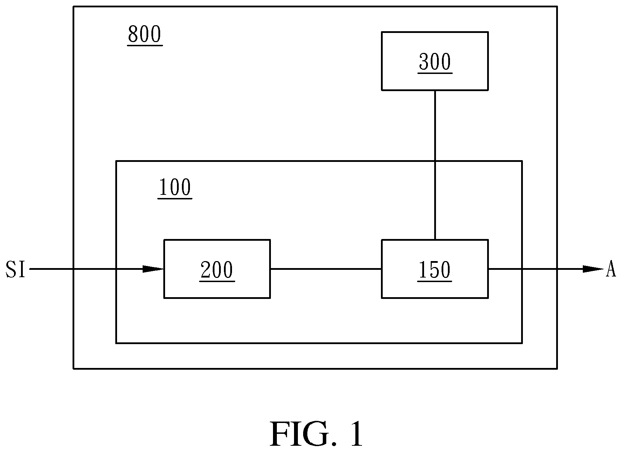

FIG. 1 is a schematic block diagram of an embodiment of the instant disclosure. As shown in FIG. 1, an electronic device 800 of the instant disclosure comprises a rule module 300 for storing a predetermined rule and a search system 100 for searching through a network. The search system 100 comprises an information input receiver 200 for receiving input string information and an information processor 150 coupled to the information input receiver 200. In the embodiment, the information input receiver 200 is for receiving an input string SI inputted by a user and generating a corresponding input signal. For instance, while the information input receiver 200 is a voice sensor (e.g., a digital microphone), the information input receiver 200 can sense sound of the user and generate corresponding input signals. However, the information input receiver 200 is not limited to sense or receive messages of sound. In particular, in other embodiments, the information input receiver 200 can also sense or receive messages of characters. For example, the information input receiver 200 can be a keyboard or an image identifier for receiving input string of characters. In addition, the input string SI of the user can contain voices or characters. The information input receiver 200 can be a corresponding receiving device.

In the embodiment, the information input receiver 200 and the information processor 150 are integrated into one physical device, e.g., a smart speaker. In the embodiment, the smart speaker is, but not limited to, the electronic device 800, and the information input receiver 200 is, but not limited to, a built-in microphone. In other embodiments, the information input receiver 200 and the information processor 150 are respectively in distinct physical devices and are signally connected to each other. For instance, the information input receiver 200 may be an external microphone connected to a smart phone as the electronic device 800. The information input receiver 200 can receive a voice instruction or command from the user. In such case, the information input receiver 200 and the information processor 150 are signally or electrically connected to each other. The information processor 150 can receive information signal corresponding to the input string SI from the information input receiver 200 by the signally or electrically connection and can transmit an output command A.

In the embodiment, the information processor 150 can be a computer processor or a microprocessor. In other embodiments, the information processor 150 can be integrated circuits or embedded circuits. For instance, while the electronic device 800 is a smart phone in practice, the information processor 150 can be integrated circuits or a microprocessor in the smart phone. For example, a microprocessor of Qualcomm or ARM Holdings.

The rule module 300 can store or read one or more predetermined rules of predetermined settings or configuration settings. The predetermined settings or the configuration settings are used to rule the search system 100 in terms of how to process received input signals and how to react in response to the input signals. In an embodiment, the rule module 300 can be a data storage device, e.g., a data base or a memory, in the electronic device 800 for storing the predetermined rule. Nevertheless, in other embodiments, the rule module 300 can be a data reading device in the electronic device 800 for reading the predetermined rule stored in a cloud storage space or other remote storage devices.

In the embodiment, the information processor 150 is for initiating and/or driving a device of at least one searching object searched through the network which is specified by the search system 100. For instance, while the search system 100 specifies a searching of certain keyword string on a Youtube service platform on the network, the information processor 150 would initiate a computer or a service component related to the Youtube to carry out a network searching of the keyword string.

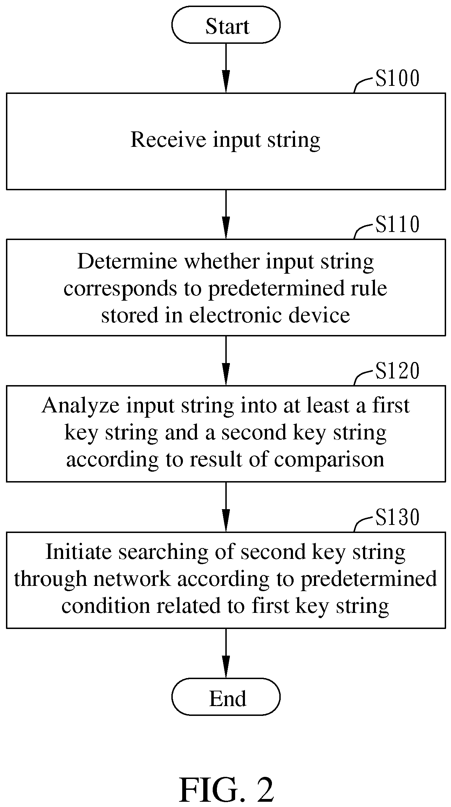

FIG. 2 is a flow chart of a search method which can be applied to the electronic device 800 according to an embodiment of the instant disclosure. As shown in FIG. 2, the search method of the instant disclosure comprises steps S100 to S130. The detailed illustration is as follows:

The step S100 comprises receiving an input string. In particular, the information input receiver 200 of the search system 100 would receive the input string SI. While the information input receiver 200 is a sound or voice sensor, the input string SI received by the information input receiver 200 may be an input string of user voice sensed by the sensor. It is not limited to the above embodiment. In other embodiments, the input string SI may be a character input string, e.g., a character string given by the user. For instance, while the search system 100 is applied to a Chatbot, the user can give a command of string to the Chatbot. For example, a command of string "please play Gentleness of May Day."

The step S110 comprises determining whether the input string corresponds to the predetermined rule which is stored in the rule module 300 or is readable by the rule module 300. In the embodiment, the predetermined rule has a substantial construction as follows.

```
    <REGX name="grammer"expr="specified characteristics">
    <call name= "grammer_next_level1 ">! arg2$</call>
    <call name="grammer_next_level2">! arg3$</call>
    <call name="TextToVoice">machine-speaking</call>
    </REGX>
```

In the above construction of rule:
The "name = "grammer"" is to specify the name of syntax. The name "grammer" is the name of a set of rules inside the brackets of the "<REGX>... </REGX>."

The "expr = "specified characteristics"" is to specify characteristics for searching a key string in a sentence spoke by a user by the natural language processing engine of the instant disclosure.

The "!arg2$" of the "<call name= "grammer_next_level1" >!arg2$</call>" is the string (i.e., a front string) in front of a characteristic string after the natural language processing engine of the instant disclosure divides a sentence string of the input string SI according to the above characteristic (expr="...). The "grammer_next_level1" of the next level can continue to analyze the divided front string.

The "!arg3$" of the "<call name= "grammer_next_level2">!arg3$</call>" is the string (i.e., a rear string) in rear of the characteristic string after the natural language processing engine of the instant disclosure divides the sentence string of the input string SI according to the above characteristic (expr="...).

The "<call name="TextToVoice">machine-speaking</call>": while the natural language processing engine of the instant disclosure identifies the name of syntax is "TextToVoice," it would respond to the user with the string "machine-speaking" in the rear by a Text-To-Speech (TTS) synthetic voice function of the system.

In the embodiment, while the search system 100 executes the step S110, the information processor 150 would receive the information signal related to the input string SI from the information input receiver 200. In the embodiment, the information input receiver 200 would convert the input string SI into the corresponding sentence string and transmit the information signal to the information processor 150. In the meantime, the information processor 150 would compare the sentence string with one or more of the predetermined rules stored in or read by the rule module 300 to make determination. While it is found that the sentence string contains a specified characteristic (expr="...) in certain predetermined rule or that there is no any matched characteristic in the predetermined rules, the information processor 150 would generate a result of the determination according to a result of the match.

For instance, while the predetermined rule of the rule module 300 is:

```
    <REGX name="play_song_by_searching_Youtube_English" expr="(some)? Song(s)? of'>
             <call name="search_Youtube_by_Keyword">!arg3$</call>
    </REGX>
```

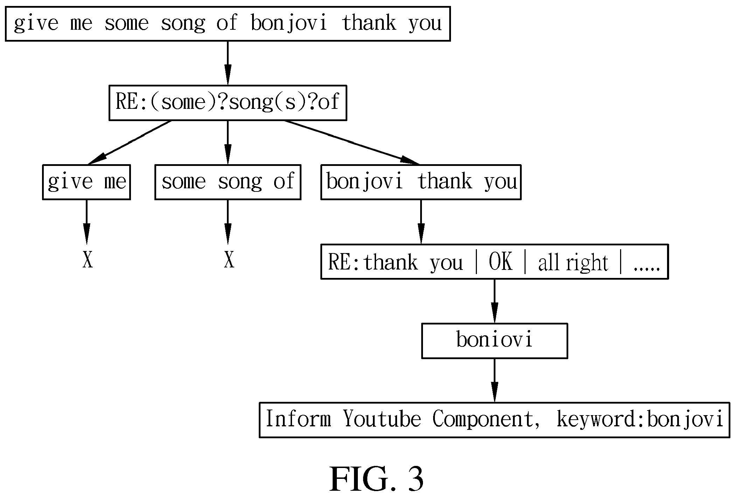

As an embodiment of FIG. 3, while the sentence string of the input string SI is "give me some song of bonjovi thank you," according to the step S110, the information processor 150 would compare the sentence string with the above predetermined rule to make determination. During the process of the determinination, it is found that the sentence string contains a specified characteristic of "some song of." That is, the sentence string corresponds to the predetermined rule.

The step S120 comprises analyzing the input string into at least a first key string and a second key string according to the predetermined rule. In particular, while a result of the comparison indicates that the sentence string of the input string SI corresponds to one set of rules, the information processor 150 would analyze the sentence string according to a condition specified by the set of rules. As an embodiment of FIG. 3, the information processor 150 would analyze the sentence string to define the key string of the characteristic in the sentence string as the first key string (i.e., the first key string is "some song of"). Next, the information processor 150 would analyze a string in front of the first key string in the sentence string into a front string ("give me") and analyze a string in rear of the first key string in the sentence string into a rear string ("bonjovi thank you"). In the embodiment, the above set of rules uses a tag of "!arg3$," and the rear string "bonjovi thank you" would be set as the second key string.

In an embodiment, after the step S120 is executed, the information processor 150 executes a filtering step on the second key string. For instance, as an embodiment of FIG. 3, the information processor 150 deletes redundant words in the second key string according to a predetermined filtering condition. For example, while the "thank you," "ok," and "all right" are defined as redundant words, the information processor 150 can execute a process of deleting "thank you" in the second key string. In other words, the second key string is ultimately set as "bonjovi."

The step S130 comprises initiating a network searching of the second key string through the network according to a predetermined condition related to the first key string. In the embodiment, the predetermined condition comprises a used media platform and a used search engine. In particular, as an embodiment of FIG. 3, the information processor 150 of the search system 100 would initiate a process of the network searching of the second key string through the network according to the predetermined condition. In the embodiment, the information processor 150 may comprise one or more distinct computers or program components for communicating with different kinds of media platforms, search engines, or music/video platforms. In the embodiment, the first key string "some song of' is related to a call program code "search_Youtube_by_Keyword." While the information processor 150 obtains the second key string, the information processor 150 would transmit the second key string "bonjovi" to one of the program components related to the Youtube to carry out the search of the second key string "bonjovi" according to the name of the above call program code in the predetermined rule. In other words, the program component related to Youtube is initiated by the information processor 150 and driven by the information processor 150 to be connected the Youtube platform, and would carry out the search on the Youtube platform according to the second key string "bonjovi." In an embodiment, while the search is not carried out, a mobile device can make the information input receiver 200 receive the input string again by sending a command. That is, the step returns to the step S100.

In an embodiment, the predetermined rule comprises at least one verb keyword. The information processor 150 analyzes the sentence into the front string, the first key string, and the rear string according to the at least one verb keyword. In the embodiment, the information processor 150 determines that the input string corresponds to the predetermined rule while the input string has the verb keyword. As an embodiment of FIG. 3, the verb keyword is "give." The information processor 150 analyzes the sentence into the front string "me", the first key string "some song of', and the rear string "bonjovi thank you." In an embodiment, the search method of the instant disclosure further comprises determining a sequence of the first key string, the front string, and the rear string to generate a verb sequence result according to the determination. In addition, the information processor 150 generates the verb sequence result according to the input string and the verb keyword.

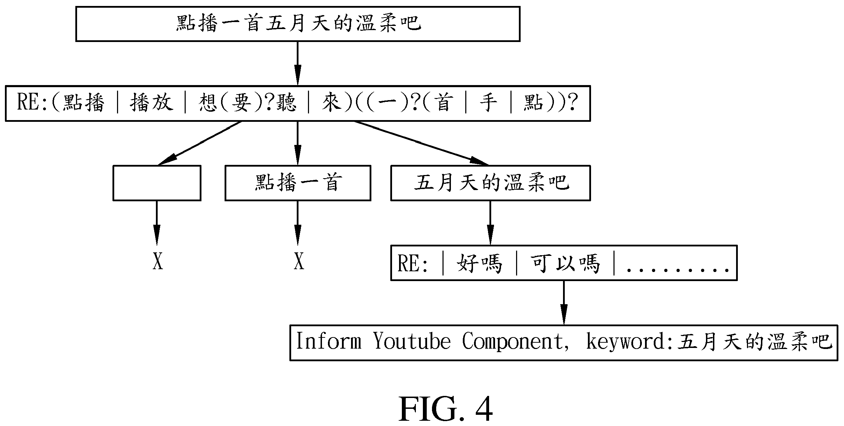

In an embodiment, the predetermined rule has a language setting. The language setting is further related to the sequence of the first key string, the front string, and the rear string. The determining step further comprises setting the second key string as the front string or the rear string according to the verb sequence result and the language setting. In the embodiment, the information processor 150 obtains the string searched through the network according to the verb sequence result and the language setting. In particular, as another embodiment of FIG. 4 and comparing to the embodiment of FIG. 3, the predetermined rule matched by the search system 100 in the embodiment specifies a search based upon the language of Chinese. That is, the search system 100 has a language setting of Chinese. While a sentence of a user is " 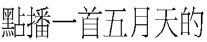 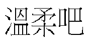 (well, to play a song of Gentleness of May Day)," a set of predetermined rules matched in the rule module 300 by the information processor 150 may be:

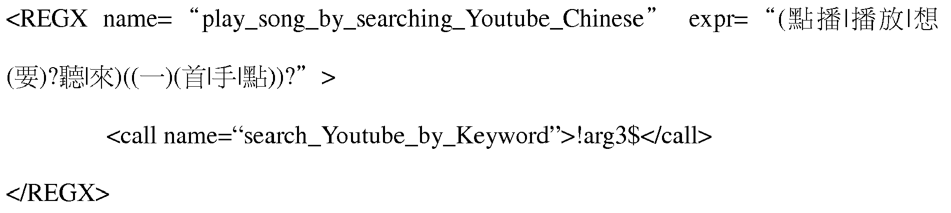

In such case, according to "YouTube_Chinese," the language setting of the set of predetermined rules is "Chinese," and related characteristics of the sentence is Chinese strings. In the embodiment, the specified characteristics a specified characteristic (expr="...) in the predetermined rules are any start string related to " 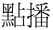 (to play)," " 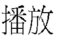 (play)," " 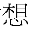 (want)," " 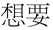 (want to)," " 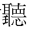 (listen)," and " 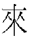 (have)" plus a character " 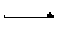 (a/an)" with an end string of " 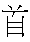 (song of)," " 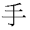 (pack of)," or " 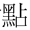 (some of)." For example, the " 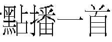 (to play a song of)" has the start string " 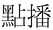 (to play)" plus the character " 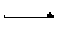 (a)" with the end string " 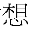 (song of)." According to the " 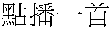 (to play a song of)"of the first key string, the information processor 150 would determine that the sentence " 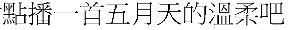 (to play a song of Gentleness of May Day)" is only consisted of the first key string " 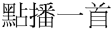 (to play a song of)" and the rear string " 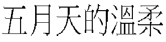 (Gentleness of May Day)" (i.e., there is no front string). Since the predetermined rule uses the tag of "!arg3$", the information processor 150 would set the rear string " 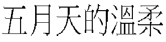 (Gentleness of May Day)" as the second key string. Next, after the redundant words such as " 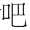 (well)," " 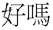 (ok?)," or " 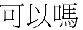 (all right?)" are deleted, the information processor 150 will initiate the subsequent network searching of the second key string through the network. The information processor 150 can initiate the network searching of strings through the network according to the predetermined condition corresponding to the verb keyword.

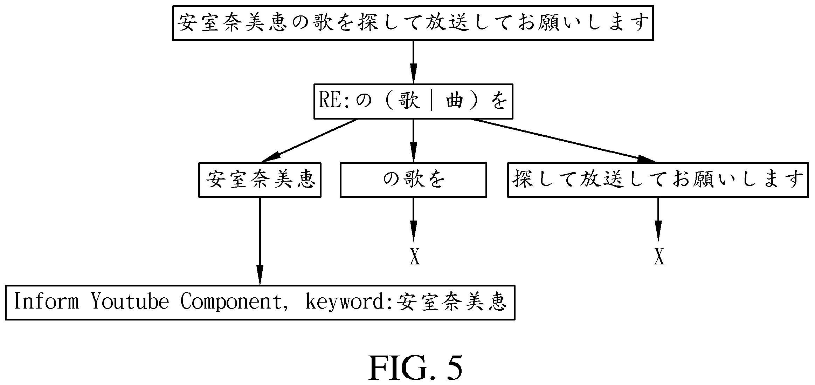

FIG. 5 is a schematic view of another embodiment. As shown in FIG. 5, the search system 100 of the instant disclosure can be applied to sentences of Japanese. In particular, while the predetermined rule is:

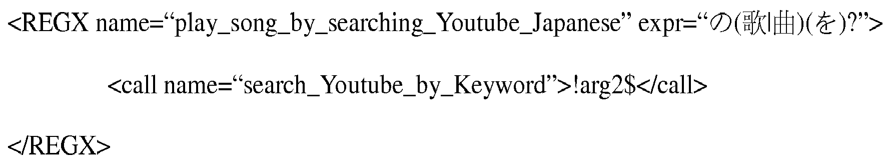

The information processor 150 would detect that the language setting of the predetermined rule is "Japanese," and the use of the "!arg2$" is to specify the front string " 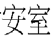 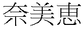 (Namie Amuro)" of the first key string " 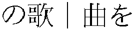 (to have song of | music of)" as the second key string. In such case, the information processor 150 would initiate a subsequent process of network searching of the second key string of the " 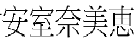 (Namie Amuro)" through the network.

According to the search system and method, the instant disclosure can cater to changes of usage habits of users or changes of popular proper nouns, can support multi languages, and can be quickly customized to be applied to different kinds of electronic products. Comparing to any of prior program languages (e.g., C, C++, C#, or JAVA), the mechanism and construction of the predetermined rule of the instant disclosure is a descriptive language of higher level, such that people who are not software engineers can design the natural language processing well. In particular, general salespersons are usually multilingual (English, Japanese, Korean, etc.) professionals. However, salespersons are not software engineers and are incapable of designing the natural language processing by program languages. Based upon the higher-level, simpler construct design of the predetermined rule of the natural language processing according to the instant disclosure, even a sales department can handle the work of the natural language processing design.

While the instant disclosure has been described by way of example and in terms of the particular embodiments, the embodiments of the instant disclosure can be modified within the spirit and scope of the instant disclosure after being applied with known knowledges. While modifying, equivalent meanings and scope of the embodiments of the instant disclosure shall be fully understood. It is understood that wordings and terminologies adopted in the instant disclosure are only descriptive but are not for limitation. Therefore, under the circumstances that the particular embodiments are recited in the instant disclosure, anyone skilled in the art will understand that various modifications and improvements can be made within the spirit and scope of the instant disclosure.

## Claims

1. A search method applied to an electronic device (800) for searching through a network, **characterized in that** the search method comprises:
receiving an input string (SI);
determining whether the input string (SI) corresponds to a predetermined rule stored in the electronic device (800);
if yes, analyzing the input string (SI) into at least a first key string and a second key string according to the predetermined rule; and
initiating a searching of the second key string through the network according to a predetermined condition related to the first key string.

2. The search method of claim 1, wherein the input string (SI) is a voice or characters.

3. The search method of claim 1 or claim 2, wherein the input string (SI) is a sentence, the predetermined rule comprises at least one verb keyword, and the step of determining the input string (SI) and the predetermined rule further comprises:
analyzing the sentence into a front string, the first key string, and a rear string according to the at least one verb keyword.

4. The search method of claim 3, further comprising:
determining a sequence of the first key string, the front string, and the rear string to generate a verb sequence result according to the determination.

5. The search method of claim 4, wherein the predetermined rule has a language setting related to the sequence of the first key string, the front string, and the rear string, and the determining step further comprises:
setting the second key string as the front string or the rear string according to the verb sequence result and the language setting of the predetermined rule.

6. The search method of any one of claim 1 to claim 5, wherein the predetermined condition comprises a used media platform and a used search engine.

7. An electronic device (800), **characterized in that** the electronic device (800) comprises:
a rule module (300) for storing or reading a predetermined rule; and
a search system (100) for searching through a network, comprising:
an information input receiver (200) for receiving an input string (SI); and
an information processor (150) coupled to the information input receiver (200) for determining whether the input string (SI) corresponds to the predetermined rule, analyzing the input string (SI) according to the predetermined rule, and initiating a network searching of at least one string through the network according to a predetermined condition.

8. The electronic device (800) of claim 7, wherein the predetermined rule comprises at least one verb keyword, and the information processor (150) determines that the input string (SI) corresponds to the predetermined rule while the input string (SI) has the verb keyword.

9. The electronic device (800) of claim 8, wherein the information processor (150) generates a verb sequence result according to the input string (SI) and the verb keyword.

10. The electronic device (800) of claim 9, wherein the predetermined rule has a language setting, the information processor (150) obtains the string searched through the network according to the verb sequence result and the language setting.

11. The electronic device (800) of any one of claim 8 to claim 10, wherein the information processor (150) initiates the network searching of the input string (SI) through the network according to the predetermined condition corresponded by the verb keyword.

12. The electronic device (800) of any one of claim 7 to claim 11, wherein the predetermined condition comprises a used media platform and a used search engine.

13. The electronic device (800) of any one of claim 7 to claim 12, wherein the information input receiver (200) receives a voice or characters and converts the voice or the characters into the input string (SI).
